# EUROPÄISCHE PATENTSCHRIFT

(11) **EP 2 216 671 B1**
(45) Veröffentlichungstag und Bekanntmachung des Hinweises auf die Patenterteilung: **14.08.2013**
(21) Anmeldenummer: 10161720.7
(22) Anmeldetag: 18.09.2006
(51) Int. Cl.: G02B 21/00

(54) **Vorrichtung und Verfahren zur Detektion mit einem Scanmikroskop**
Device and method for detection with a scanning microscope
Dispositif et procédé de détection avec un microscope à balayage

(30) Priorität: 21.09.2005 DE 102005045163
(43) Veröffentlichungstag der Anmeldung: 11.08.2010
(62) Teilanmeldung aus: 06120854.2
(73) Patentinhaber: Leica Microsystems CMS GmbH, 35578 Wetzlar (DE)
(72) Erfinder: Widzgowski, Bernd, 69221, Dossenheim (DE); Dr. Birk, Holger, 74909, Meckesheim (DE)
(74) Vertreter: Schaumburg, Thoenes, Thurn, Landskron, Eckert

(56) Entgegenhaltungen:
- DE-A1- 10 126 286
- DE-A1- 10 228 478
- JP-A- 2003 043 369
- JP-A- 2004 144 734
- US-A- 5 283 433

## Beschreibung

Die Erfindung betrifft eine Vorrichtung zur Detektion mit einem Scanmikroskop. Insbesondere betrifft die Erfindung eine Vorrichtung zur Detektion mit einem Scanmikroskop, wobei das Scanmikroskop eine Scaneinrichtung besitzt, die einen Beleuchtungslichtstrahl durch eine Scanoptik und eine Mikroskopoptik hindurch über bzw. durch ein Objekt führt, wobei der Beleuchtungslichtstrahl das Objekt in mehreren Pixeln beleuchtet, und eine Detektoreinheit, die das vom Objekt ausgehende Licht empfängt und Detektionssignale erzeugt.

Ferner betrifft die Erfindung ein Verfahren zur Detektion mit einem Scanmikroskop. Insbesondere betrifft die Erfindung ein Verfahren, wobei das Scanmikroskop eine Scaneinrichtung besitzt, die einen Beleuchtungslichtstrahl durch eine Scanoptik und eine Mikroskopoptik hindurch über bzw. durch ein Objekt führt, wobei mit dem Beleuchtungslichtstrahl das Objekt in mehreren Pixeln beleuchtet wird, und wobei mit einer Detektoreinheit das vom Objekt ausgehende Licht empfangen wird und Detektionssignale erzeugt werden.

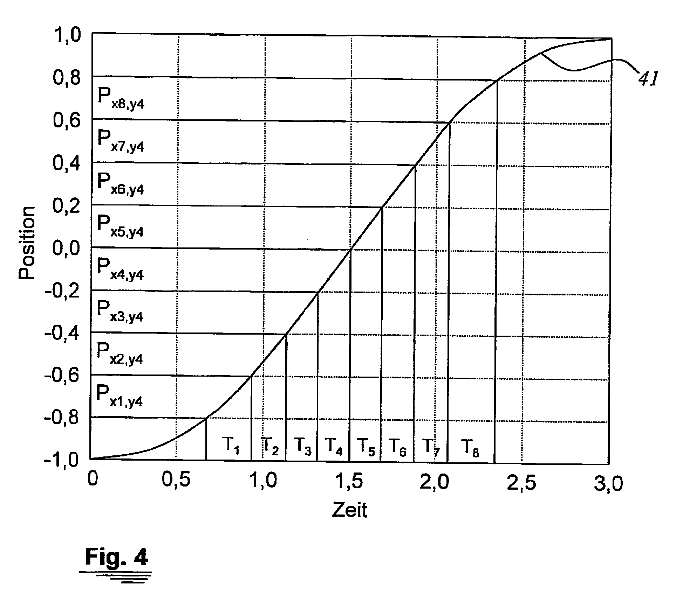

Die deutsche Offenlegungsschrift DE 101 26 286 A1 offenbart ein Verfahren und eine Vorrichtung zum punktweisen Scannen einer Probe. Das Verfahren ist gekennzeichnet durch die Schritte des Erzeugens eines Sollsignals für jeden Scanpunkt und des Übergebens des Sollsignals an eine Scaneinrichtung. In weiteren Schritten erfolgt das Ermitteln eines Istsignals, für jeden Scanpunkt aus der Stellung der Scaneinrichtung. Ferner erfolgt das Detektieren mindestens eines Detektionssignals für jeden Scanpunkt, das Errechnen eines Darstellsignals und einer Bildpunktposition aus dem Istsignal und/oder dem Sollsignal und dem Detektionssignal und das Zuordnen des Darstellsignals zu der Bildpunktposition. Problematisch ist, dass herkömmlich die Auslenkung des Spiegelgalvanometers z.B. sinusförmig verläuft, d.h. in der Nähe der Umkehrpunkte (entspricht den Bildrändern) ändert sich die Auslenkung langsamer als im Nulldurchgang. Aufgrund dieser Nichtlinearität ergibt sich für jedes Pixel eine unterschiedliche Beleuchtungs- bzw. Zykluszeit Tᵢ (siehe Fig. 4). Herkömmlich werden die vom Detektor erzeugten Signale mit einem in Analogtechnik aufgebauten Integrator über eine konstante, für alle Pixel geeignete maximale Zeit integriert. Anschließend wird der Datenwert von einem Analog-Digital-Wandler ausgelesen, und der Integrator gelöscht. Erst dann beginnt ein neuer Zyklus für das nächste Pixel. Nachteilig dabei ist, dass sich die Integrationszeitzeit nach den Pixeln mit der kürzesten Beleuchtungs- bzw. Zykluszeit richtet. Somit geht für die Pixel an den Bildrändern (Umkehr der Scanrichtung) mit längeren Zykluszeiten wertvolle Meßzeit verloren, d.h. das S/N-Verhältnis ist dort verschlechtert.

Die Offenlegungsschrift DE 197 02 752 A1 offenbart ein Ansteuersystem für einen Scannerantrieb. Der Scanner wird mit einem Schwingmotor angetrieben, so dass ein Scanspiegel schwingt. Eine Ansteuereinheit dient zur linearen Speisung des Schwingmotors mit einer geeigneten Ansteuerfrequenz, so dass der Scannstrahl auf der Oberfläche der Probe eine im Wesentlichen auch lineare Bahn beschreibt.

Die Europäische Patentanmeldung EP 0 845 693 umfasst ein Konfokalmikroskop und ein Verfahren zur Erzeugung eines 3-dimensionalen Bildes mit einem Konfokalmikroskop. Es ist eine Einrichtung vorgesehen, die in Richtung der optischen Achse eine Relativbewegung erzeugt. Ferner ist eine Kontrolleinheit vorgesehen, die simultan die Einrichtung zur Erzeugung der Relativbewegung und eine Scaneinrichtung steuert bzw. regelt.

Weitere Nachteile des Standes der Technik sind, dass während der notwendigen Löschzeit eines analogen Integrators kein Eingangssignal detektiert werden kann. Bei hohen Abtastraten kann aber die Löschzeit mehr als die Hälfte der Zykluszeit ausmachen. Bei 8 kHz (resonanter Scan) kann z.B. die Integrationszeit pro Pixel 25ns betragen. Dagegen dauert die Löschung des integrierten Signals (bei kurzen Integrationsdauern) mindestens ca. 20 ns. Aufgrund einer hohen geforderten Scangeschwindigkeit ist allerdings ein Löschen des Integrators nicht mehr vollständig möglich. Auch deshalb muss die Integrationszeit (und damit auch die Zykluszeit) innerhalb einer abzutastenden Zeile konstant sein. Der Integrations-Endwert und damit auch die subjektive Bildhelligkeit ist also von der Scangeschwindigkeit und dem Scanformat abhängig. Die Bildeinstellungen müssen vom User entsprechend korrigiert werden.

JP 2003-043369 A beschreibt eine Vorrichtung und ein Verfahren zur Detektion von Licht in einem Scanmikroskop. Das Signal einer Detektoreinheit wird über einen Verstärker an einen A/D-Wandler geleitet und dort in ein digitales Signal gewandelt. Eine Arithmetikeinheit bildet einen Mittelwert des Detektorsignals und erzeugt Pixel-Daten. Mit Hilfe einer Steuereinheit wird die Sampling-Zeit variierbar abhängig von einer Mittelwert-Anzahl eingestellt.

Eine ähnliche Vorrichtung und ein Verfahren beschreibt JP 2004-144734 A.

Der Erfindung liegt die Aufgabe zugrunde eine Vorrichtung zu schaffen, mit der die Bildqualität verbessert ist.

Die Aufgabe wird gelöst durch eine Vorrichtung, die die Merkmale des Anspruchs 1 umfasst.

Der Erfindung liegt weiterhin die Aufgabe zugrunde, ein Verfahren zu schaffen, mit dem die Bildqualität verbessert ist.

Die objektive Aufgabe wird durch ein Verfahren gelöst, das die Merkmale des Patentanspruchs 5 aufweist.

Erfindungsgemäß ist der Detektoreinheit eine digitale Schaltung nachgeschaltet, die die Detektionssignale innerhalb eines Pixels periodisch abfragt und daraus einen Mittelwert bildet. Ferner ist von Vorteil, dass die Detektionssignale der Detektoreinheit mittels einer digitalen Schaltung periodisch abgefragt und aufsummiert werden, und dass die Summe der Detektionssignale durch die Anzahl der aufsummierten Detektionssignale geteilt wird.

Die Erfindung sieht vor, dass die digitale Schaltung einen Summierer enthält, der die mehreren Detektionssignale innerhalb eines Pixels periodisch summiert, und dass die digitale Schaltung einen Dividierer enthält, der die Summe der mehreren Detektionssignale durch eine Anzahl der Detektionssignale innerhalb des jeweiligen Pixels teilt.

Dem Summierer und dem Dividierer ist in der digitalen Schaltung (30) ein Multiplizierer vorgeschaltet.

Der Multiplizierer führt eine Verstärkung der Detektionssignale durch, wodurch die numerische Genauigkeit des Summierers und des Dividierers erhöht ist.

Das Scanmikroskop ist mit einem Einstellelement für das Gain versehen.

Die Nichtlinearität der Analog-Verstärkung der Detektoreinheit ist durch entsprechende Kennlinienhinterlegung in der digitalen Schaltung kompensierbar. Die Detektoreinheit besitzt damit eine Kennlinie, die mittels der Verstärkung in der digitalen Schaltung eine Dynamikerhöhung der Empfindlichkeit der Detektoreinheit erzielt.

Weitere vorteilhafte Ausgestaltungen der Erfindung können den Unteransprüchen entnommen werden.

In der Zeichnung ist der Erfindungsgegenstand schematisch dargestellt und wird anhand der Figuren nachfolgend beschrieben. Dabei zeigen:
- Fig. 1: eine schematische Darstellung eines Scanmikroskops mit einer Detektionseinheit und einer digitalen Schaltung zur Auswertung der Detektionssignale;
- Fig. 2a: eine schematische Ansicht der Vorgehensweise, mit der ein zu untersuchendes Objekt pixelweise mit einer ersten Pixelgröße abgetastet wird;
- Fig. 2b: eine schematische Ansicht der Vorgehensweise, mit der ein zu untersuchendes Objekt pixelweise mit einer zweiten Pixelgröße abgetastet wird;
- Fig. 3: eine schematische Ansicht des Aufbaus der digitalen Schal- tung;
- Fig. 4: eine graphische Darstellung der unterschiedlichen Sampling- zeiten für Pixel mit einheitlicher Größe;
- Fig. 5: eine graphische Darstellung der Spannung an der Detektorein- heit als Funktion des resultierenden Gains; und
- Fig. 6: eine schematische Darstellung eines Scanmikroskops mit einer Detektionseinheit und einer digitalen Schaltung zur Auswertung der Detektionssignale und einem Einstellelement für die Ver- stärkung.

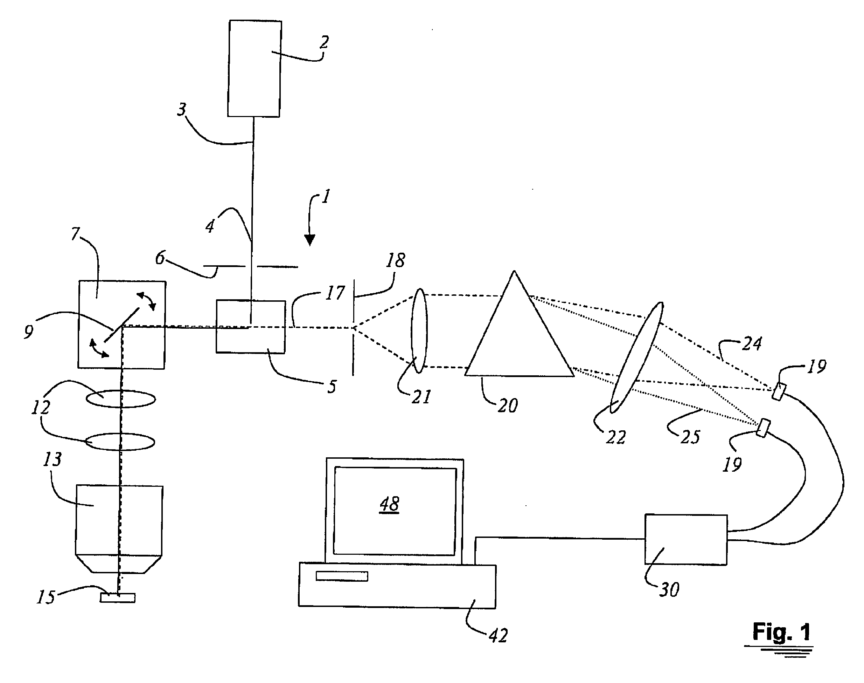

In Fig. 1 zeigt den schematischen Aufbau eines konfokalen Scanmikroskops 1, in dem die erfindungsgemäße Vorrichtung implementiert ist. Das Scanmikroskop umfasst eine Detektoreinheit 19, die in unterschiedlichen Ausführungsformen ausgebildet sein kann. Der von mindestens einem Beleuchtungssystem 2 kommende Beleuchtungslichtstrahl 3 wird von einem Strahlteiler oder einem geeigneten Umlenkmittel 5 zu einer Scaneinrichtung 7 geleitet. Bevor der Beleuchtungslichtstrahl 3 auf das Umlenkmittel 5 trifft, passiert dieser ein Beleuchtungspinhole 6. Die Scaneinrichtung 7 umfasst mindestens einen Scanspiegel 9, der den Beleuchtungslichtstrahl 3 durch eine Scanoptik 12 und eine Mikroskopoptik 13 hindurch über bzw. durch ein Objekt 15 führt.

Der Scanspiegel 9 kann über einen Motor (nicht dargestellt) angetrieben werden, wobei zusätzlich ein Torsionsstab vorgesehnen ist, über den der Scanspiegel 9 auch als resonanter Scanspiegel 9 betreibbar ist. Der Beleuchtungslichtstrahl 3 wird bei nicht transparenten Objekten 15 über die Objektoberfläche geführt. Bei biologischen Objekten 15 (Präparaten) oder transparenten Objekten kann der Beleuchtungslichtstrahl 3 auch durch das Objekt 15 geführt werden. Zu diesen Zwecken werden nichtleuchtende Präparate ggf. mit einem geeigneten Farbstoff präpariert (nicht dargestellt, da etablierter Stand der Technik). Die in dem Objekt 15 vorhandenen Farbstoffe werden durch den Beleuchtungslichtstrahl 3 angeregt und senden Lumineszenz und/oder Fluoreszenzlicht in einem ihnen eigenen charakteristischen Bereich des Spektrums aus. Dieses vom Objekt 15 ausgehende Licht definiert einen Detektionslichtstrahl 17. Dieser gelangt durch die Mikroskopoptik 13, die Scanoptik 12 und über das Scanmodul 7 zum Umlenkmittel 5, passiert dieses und gelangt über ein Detektionspinhole 18 und das ein Spektrum erzeugende Element 20 (Prisma oder Gitter) auf die Detektoreinheit 19. Die Detektoreinheit 19 kann aus mindestens einem Photomultiplier bestehen. Ebenso ist es denkbar, dass die Detektoreinheit 19 aus einem Photomultiplier-Array oder einem CCD-Chip, einem EMCCD-Chip oder einem APD-Array besteht. Der vom Objekt 15 ausgehende bzw. definierte Detektionslichtstrahl 17 ist in Fig. 1 als gestrichelte Linie dargestellt. In der Detektoreinheit 19 werden elektrische, zur Leistung des vom Objekt 15 ausgehenden Lichtes, proportionale Detektionssignale erzeugt. Da, wie bereits oben erwähnt, vom Objekt 15 Licht nicht nur einer Wellenlänge ausgesandt wird, ist es sinnvoll vor der Detektoreinheit 19 ein dispersives Element 20 vorzusehen. Das dispersive Element 20 spaltet den Detektionslichtstrahl spektral auf, so dass die einzelnen Wellenlängen des Detektionslichts räumlich spektral getrennt sind. Dem dispersiven Element 20 ist ein Linse 21 vorgeschaltet, die den Detektionslichtstrahl 17 aufweitet und parallel macht. Dem dispersiven Element 20 ist eine weitere Linse 22 nachgeschaltet, die die spektral getrennten Strahlen 24, 25 des Detektionslichtstrahl 17 auf die Detektoreinheit 19 fokussiert. Die spektral getrennten Strahlen 24, 25 unterscheiden sich hinsichtlich der Wellenlänge und treffen somit auf unterschiedliche Photomultiplier, oder wenn die Detektoreinheit 19 als Chip ausgeformt ist, auf unterschiedliche Bereiche des Chips. Die von der Detektoreinheit 19 gelieferten Signale werden an eine digitale Schaltung 30 geleitet, in der die Sammlung der Detektorsignale stattfindet. Die digitale Schaltung 30 kann ferner mit einem Rechner 42 verbunden sein, dem ein Display 48 zugeordnet ist, auf dem z.B. die Bilddaten dargestellt werden können.

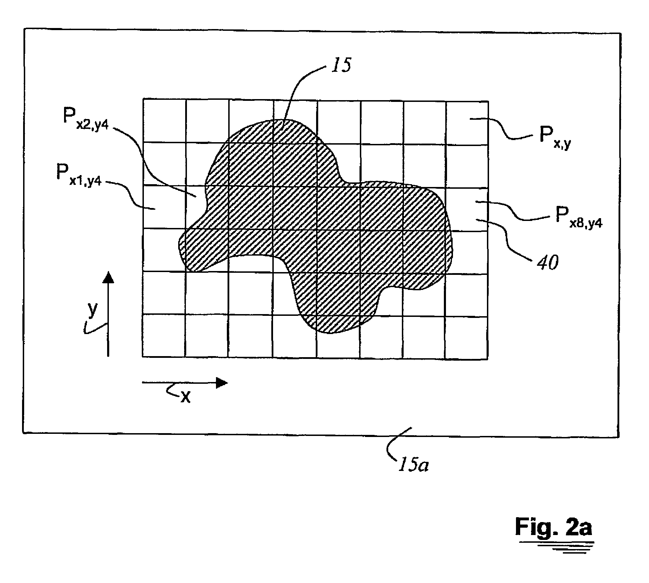

Fig. 2a zeigt eine schematische Ansicht der Vorgehensweise, mit der ein zu untersuchendes Objekt 15 pixelweise mit einer ersten Pixelgröße abgetastet wird. Das Objekt 15 ist in der Regel auf einem Objektträger 15a angebracht. Mit dem Beleuchtungslichtstrahl 3, unter Verwendung der Scaneinrichtung 7, wird das Objekt 15 in X-Koordinatenrichtung x und in Y-Koordinatenrichtung y abgerastert. Es können auch nur Teile des Objekts 15 abgetastet werden. Die Größe eines jeden einzelnen Pixels P_{x,y} richtet sich nach der vom Benutzer gewählten Einstellung. Je nach gewünschter Auflösung wird die Größe des einzelnen Pixels P_{x,y} gewählt. Aus dem Bereich, der durch die Größe eines einzelnen Pixels P_{x,y} bestimmt ist, werden die vom Beleuchtungslichtstahl 3 initiierten Signale aufgenommen. Die in Fig. 2a dargestellte Scanzeile 40, die sich aus den Pixeln P_{x1, y4}, P_{x2, y4} bis P_{x8, y4} zusammensetzt, resultiert durch die Scanbewegung des Scanspiegels 9 in X-Koordinatenrichtung x. Fig. 4 zeigt den sinusförmigen Verlauf 41 der Scanbewegung des Scanspiegels 9. Es ist selbstverständlich, dass die Anzahl der Pixel P_{x,y} Scanzeile 40 beliebig ist, und die in der Beschreibung dargestellten Ausführungsformen nicht als Beschränkung der Erfindung aufgefasst werden können.

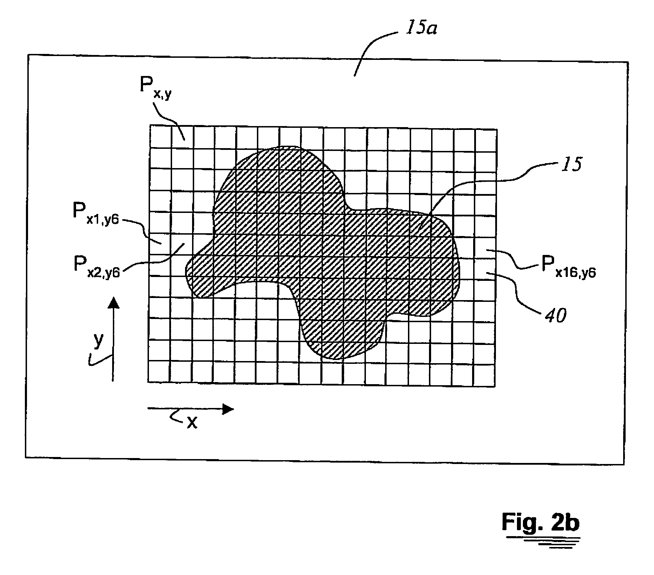

Fig. 2b zeigt eine schematische Ansicht der Vorgehensweise, mit der ein zu untersuchendes Objekt 15 pixelweise mit einer zweiten Pixelgröße abgetastet wird. Der Beleuchtungslichtstrahl 3 beschreibt hier eine Scanzeile 40, die aus mehr Pixlen P_{x,y} aufgebaut ist, als bei der in Fig. 2a dargestellten Scanzeile 40. Die in Fig. 2b dargestellte Scanlinie 40, die sich aus den Pixeln P_{x1, y6}, P_{x2, y6} bis P_{x16, y6} zusammensetzt, resultiert durch die Scanbewegung des Scanspiegels 9 in X-Koordinatenrichtung x.

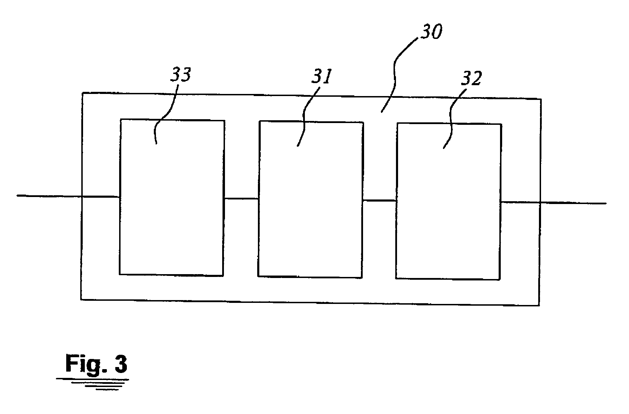

Fig. 3 zeigt eine schematische Ansicht des Aufbaus der digitalen Schaltung 30. Die digitale Schaltung 30 ist der Detektoreinheit 19 nachgeschaltet (siehe Fig. 1), die die Detektionssignale innerhalb eines Pixels P_{x,y} periodisch abfragt und daraus einen Mittelwert bildet. Die digitale Schaltung 30 enthält einen Summierer 31, der die mehreren periodischen Detektionssignale innerhalb eines Pixels P_{x,y} aufsummiert. Die digitale Schaltung 30 enthält ferner einen Dividierer 32, der die Summe der mehreren Detektionssignale durch eine Anzahl der Detektionssignale, die innerhalb des jeweiligen Pixels P_{x,y} auf-summiert wurden, teilt. Gemäβ der Erfindung ist dem Summierer 31 und dem Dividierer 32 in der digitalen Schaltung 30 ein Multiplizierer 33 vorgeschaltet. Durch eine digitale Multiplikation (vor dem Summierer 31 und folgenden Dividierer 32) kann auch eine Signalverstärkung erreicht werden, wodurch sich die numerische Genauigkeit erhöht. Durch die Mittelwertbildung ist der Ausgangswert der Detektoreinheit 19 und damit die Bildhelligkeit unabhängig von der Scangeschwindigkeit und dem Scanformat. Durch die Mittelwertbildung wird ferner das Rauschen der Ausgangsdaten verringert und es werden auch Digitalisierungsfehler ("Ausreißer") minimiert. Aufgrund der Digitalisierung sind störende Effekte, wie z.B. Parameterdrift der analogen Komponenten (durch Temperatur, Alterung, Bauteiltoleranzen) verringert bzw. ausgeschlossen.

Figur 4 zeigt eine graphische Darstellung der unterschiedlichen Samplingzeiten T₁, T₂, bis T₈ für Pixel P_{x1,y4}, P_{x2,y4} bis P_{x8,y4} mit einheitlicher Größe. Dabei entspricht die Anzahl der Pixel pro Scanzeile 40 derjenigen Anzahl, wie sie in Fig. 2a dargestellt ist. Der in etwa sinusförmige Verlauf 41 durch die Ansteuerung des mindestens einen Scanspiegels 9 bedingt. Innerhalb der unterschiedlichen Samplingzeiten T₁, T₂, oder T₈ werden für jedes Pixel P_{x,y} eine gewisse Anzahl von Detektionssignalen von der Detektoreinheit 19 mittels einer digitalen Schaltung 30 periodisch abgefragt und aufsummiert. Die Anzahl von abgefragten Detektionssignalen richtet sich nach der eingestellten Taktrate. Es ist aus Fig. 4 klar ersichtlich, dass die einzelnen Pixel P_{x,y} ohne Zwischenraum aneinander grenzen, so dass keine Information vom Objekt 15 verloren geht. Ebenso ist eine optimale Messzeit pro Pixel P_{x,y} im Vergleich zur analogen Integration garantiert, die durch das Vermeiden der Löschzeit eines analogen Integrators bedingt ist. Es entstehen keine Zeitverluste durch Löschen des Summierers/Interators bzw. durch Wartezeiten aufgrund des Zeittacktes. Ferner wird durch die Erfindung eine variable Zykluszeit in Abhängigkeit von der Geschwindigkeit ermöglicht, mit der sich der Abtastort bzw. Beleuchtungslichtstrahl 3 über das Objekt 15 bewegt. Die Zykluszeit ist frei wählbar. Sie kann passend zur Momentangeschwindigkeit des Abtastpunktes auf dem Objekt 15 gewählt werden.

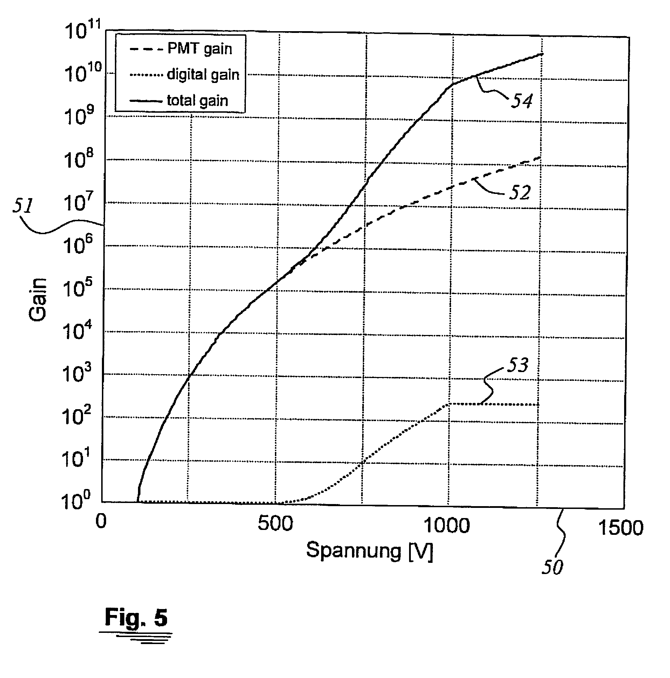

Fig. 5 zeigt eine graphische Darstellung der Spannung an der Detektoreinheit 19 als Funktion des resultierenden Gains. Auf der Abszisse 50 ist die Spannung in Volt aufgetragen, und auf der Ordinate 51 ist der Gain aufgetragen. Die Detektoreinheit 19 ist hier ein Photomultiplier, und der Gain (analoge Verstärkung) des Photomultipliers ist als Funktion der Spannung als gestrichelte Kurve 52 dargestellt. Der durch den Multiplizierer 33 in der digitalen Schaltung erreichte Gain (digitale Verstärkung) ist als gepunktete Kurve 53 dargestellt. Die Summe aus der analogen Verstärkung und der digitalen Verstärkung ist als durchgezogene Kurve 54 dargestellt. Ein Ausgleich der nichtlinearen analogen Verstärkung, abhängig von der Spannung am Photomultiplier, erfolgt durch entsprechende Kompensation bei der digitalen Verstärkung in der digitalen Schaltung 30. Wahlweise kann auch ein anderes Gain-Verhalten eingestellt werden. Mit dem hier vorgeschlagenen Verfahren ist es möglich, den oder die Photomultiplier über einen größeren Detektionsbereich im optimalen Arbeitspunkt zu betreiben. Der optimale Arbeitpunkt liegt zwischen 500V und 1000V. Es kann auch eine nichtlineare Kennlinie zur Dynamikerhöhung verwendet werden, da die Empfindlichkeit der Detektoreinheit 19 vom Pegel des Detektionssignals abhängig ist.

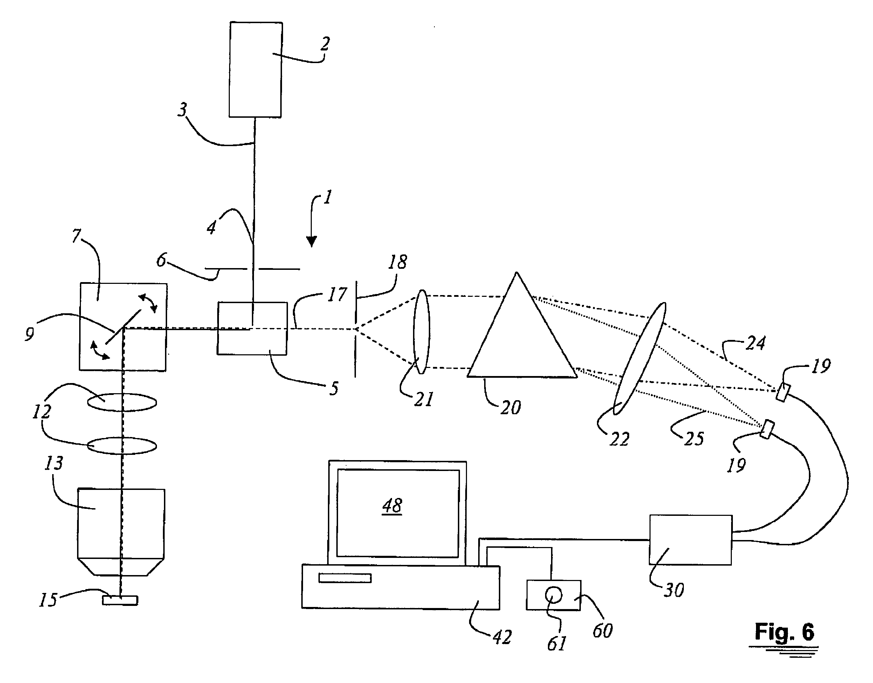

Fig. 6 zeigt eine schematische Darstellung eines Scanmikroskops 1 mit mindestens einer Detektionseinheit 19 und einer digitalen Schaltung 30 zur Auswertung der Detektionssignale. Ferner ist ein Einstellelement 60 vorgesehen, mit dem der Gain bzw. die Verstärkung durch den Benutzer eingestellt werden kann. Es ist ebenso denkbar, dass das Einstellelement 60 für den Benutzer auf dem Display 48 des Rechners 42 dargestellt wird. Eine geeignete Verknüpfung von digitaler und analoger Verstärkung für die digitale Schaltung 30 und der Detektoreinheit 19 ist gegeben, wenn beide Verstärkungen gleichzeitig variiert werden. Für den Benutzer gibt es aber nur einen Gain-Knopf 61 am Einstellelement 60. Ebenso ist eine getrennte Einstellung der digitalen und der analogen Verstärkung denkbar. Folglich sind hierzu zwei Einstellelemente (nicht dargestellt) notwendig.

## Patentansprüche

1. Vorrichtung zur Detektion von Licht, mit einem Scanmikroskop (1), das eine Scaneinrichtung (7) besitzt, zum Führen eines Beleuchtungslichtstrahls (3) durch eine Scanoptik (12) und eine Mikroskopoptik (13) des Scanmicroskops (1) hindurch über bzw. durch ein Objekt (15), wobei der Beleuchtungslichtstrahl (3) das Objekt (15) in mehreren Pixeln beleuchten kann, und mit einer Detektoreinheit (19), die das vom Objekt (15) ausgehende Licht empfängt und Detektionssignale erzeugt, wobei eine digitale Schaltung (30) der Detektoreinheit (19) nachgeschaltet ist, die die Detektionssignale innerhalb eines Pixels (P_{x,y}) periodisch abfragt und daraus einen Mittelwert bildet,
wobei die digitale Schaltung (30) einen Summierer (31) enthält, der die mehreren Detektionssignale innerhalb eines Pixels periodisch summiert, und dass die digitale Schaltung (30) einen Dividierer (32) enthält, der die Summe der mehreren Detektionssignale durch eine Anzahl der Detektionssignale innerhalb des jeweiligen Pixels (P_{x,y}) teilt,
wobei dem Summierer (31) und dem Dividierer (32) in der digitalen Schaltung (30) ein Multiplizierer (33) vorgeschaltet ist,
wobei der Multiplizierer (33) eine Verstärkung der Detektionssignale durchführt, derart dass die numerische Genauigkeit des Summierers (31) und des Dividierers (32) erhöht ist
und wobei das Scanmikroskop (1), mit einem durch einen Benutzer des Scanmikroskops (1) einstellbaren Einstellelement (60) für die Verstärkung versehen ist, so dass eine Verknüpfung von digitaler Verstärkung in der digitalen Schaltung (30) und analoger Verstärkung der Detektoreinheit (19) gegeben ist.

2. Vorrichtung nach Anspruch 1, **dadurch gekennzeichnet, dass** die Analog-Verstärkung der Detektoreinheit (19) durch entsprechende Multiplizierung in der digitalen Schaltung (30) kompensierbar ist.

3. Vorrichtung nach Anspruch 2, **dadurch gekennzeichnet, dass** die Detektoreinheit (19) eine Kennlinie (54) besitzt, die mittels der Verstärkung in der digitalen Schaltung eine Dynamikerhöhung der Empfindlichkeit der Detektoreinheit (19) erzielt.

4. Vorrichtung nach einem der Ansprüche 1 bis 3, **dadurch gekennzeichnet, dass** das Scanmikroskop (1) ein Laserscanmikroskop ist.

5. Verfahren zur Detektion von Licht mit einem Scanmikroskop (1), wobei das Scanmikroskop (1) eine Scaneinrichtung (7) besitzt, die einen Beleuchtungslichtstrahl (3) durch eine Scanoptik (12) und eine Mikroskopoptik (13) hindurch über bzw. durch ein Objekt (15) führt, wobei mit dem Beleuchtungslichtstrahl (3) das Objekt (15) in mehreren Pixeln (P_{x,y}) beleuchtet wird, und wobei mit einer Detektoreinheit (19) das vom Objekt (15) ausgehende Licht empfangen wird und Detektionssignale erzeugt werden, mit den folgenden weiteren Schritten, dass die Detektionssignale der Detektoreinheit (19) mittels einer digitalen Schaltung (30) periodisch abgefragt und aufsummiert werden, und dass die Summe der Detektionssignale durch die Anzahl der aufsummierten Detektionssignale geteilt wird,
dass die digitale Schaltung einen Summierer (31) enthält, mit dem die mehreren Detektionssignale innerhalb eines Pixels (P_{x,y}) periodisch summiert werden, und dass die digitale Schaltung (30) einen Dividierer (32) enthält, mit dem die Summe der mehreren Detektionssignale durch eine Anzahl der Detektionssignale innerhalb des jeweiligen Pixels (P_{x,y}) geteilt wird,
dass dem Summierer (31) und dem Dividierer (32) in der digitalen Schaltung (30) ein Multiplizierer (33) vorgeschaltet wird,
dass mit dem Multiplizierer (33) eine Verstärkung der Detektionssignale durchführt wird, derart dass die numerische Genauigkeit des Summierers (31) und des Dividierers (32) erhöht wird,
dass das Scanmikroskop (1) mit einem durch einen Benutzer des Scanmikroskops (1) einstellbaren Einstellelement (60) für die Verstärkung versehen ist, so dass eine Verknüpfung von digitaler Verstärkung der digitalen Schaltung (30) und analoger Verstärkung der Detektoreinheit (19) gegeben ist.

6. Verfahren nach Anspruch 5, **dadurch gekennzeichnet, dass** die Analog-Verstärkung der Detektoreinheit (19) durch entsprechende Multiplizierung in der digitalen Schaltung (30) kompensiert wird.

7. Verfahren nach Anspruch 6, **dadurch gekennzeichnet, dass** die Detektoreinheit (19) eine Kennlinie (54) besitzt, die mittels der Verstärkung in der digitalen Schaltung (30) in seiner Dynamik erhöht wird.

8. Verfahren nach einem der Ansprüche 5 bis 7, **dadurch gekennzeichnet, dass** das Scanmikroskop (1) ein Laserscanmikroskop ist.

## Claims

1. A device for detecting light with a scanning microscope (1) having a scanning device (7) that is adapted to guide an illumination light beam (3) through a scanning optical system (12) and a microscope optical system (13) of the scanning microscope (1) over an object (15) or through an object (15), wherein the illumination light beam (3) can illuminate the object (15) in several pixels, wherein the scanning microscope comprises a detector unit (19) that receives the light coming from the object (15) and is adapted to generate detection signals, wherein a digital circuit (30) is arranged downstream of the detector unit (19) and is adapted to periodically query the detection signals within a pixel (P_{x,y}) and to form an average value therefrom,
wherein the digital circuit (30) includes an adder (31) which periodically adds up the several detection signal within a pixel and wherein the digital circuit (30) includes a divider (32) which divides the sum of the several detection signals by a number of the detection signals within the respective pixel (P_{x,y}),
wherein in the digital circuit (30) a multiplier (33) is arranged upstream of the adder (31) and the divider (32),
wherein the multiplier (33) performs an amplification of the detection signals in such a manner that the numerical accuracy of the adder (31) and the divider (32) is increased,
and wherein the scanning microscope (1) is provided with a setting element (60) for the gain that can be set by the user of the scanning microscope (1), so that a combination of digital amplification in the digital circuit (30) and analog amplification of the detector unit (19) is given.

2. The device according to claim 1, **characterized in that** the analog amplification of the detector unit (19) can be compensated by a corresponding multiplication in the digital circuit (30).

3. The device according to claim 2, **characterized in that** the detector unit (19) has a characteristic (54) which by means of the amplification in the digital circuit achieves an increase in dynamics of the sensitivity of the detector unit (19).

4. The device according to one of claims 1 to 3, **characterized in that** the scanning microscope (1) is a laser scanning microscope.

5. Method for detecting light by means of a scanning microscope (1), wherein the scan microscope (1) includes a scanning device (7) that is adapted to guide an illumination light beam (3) through a scanning optical system (12) and a microscope optical system (13) over an object (15) or through an object (15), wherein the object (15) is illuminated by means of the illumination light beam (3) in several pixels (P_{x,y}) and wherein by means of a detector unit (19) the light coming from the object (15) is received and detection signals are generated, comprising the following further steps that the detection signals of the detector unit (19) are periodically queried and added up with the aid of a digital circuit (30) and the sum of the detection signals is divided by the number of the added up detection signals,
the digital circuit includes an adder (31) with which the several detection signals within a pixel (P_{x,y}) are periodically added up, and in that the digital circuit (30) includes a divider (32) with which the sum of the several detection signals is divided by a number of the detection signals within the respective pixel (P_{x,y}),
in the digital circuit (30) a multiplier (33) is arranged upstream of the adder (31) and the divider (32),
by means of the amplifier (33) an amplification of the detection signals is performed in such a manner that the numerical accuracy of the adder (31) and the divider (32) is increased,
that the scanning microscope (1) is provided with a setting element (60) for the gain that can be set by the user of the scanning microscope (1), so that a combination of digital amplification of the digital circuit (30) and analog amplification of the detector unit (19) is given.

6. Method according to claim 5, **characterized in that** the analog amplification of the detector unit (19) is compensated by a corresponding multiplication in the digital circuit (30).

7. Method according to claim 6, **characterized in that** the detector unit (19) possesses a characteristic (54) which is increased in its dynamics by means of the amplification in the digital circuit (30).

8. Method according to one of claims 5 to 7, **characterized in that** the scanning microscope (1) is a laser scanning microscope.

## Revendications

1. Dispositif de détection de lumière, comprenant un microscope à balayage (1) possédant un mécanisme de balayage (7) apte à guider un faisceau de lumière d'éclairement (3) à travers une optique de balayage (12) et une optique de microscope (13) du microscope à balayage (1) au-dessus d'un objet (15) ou à travers un objet (15), le faisceau de lumière d'éclairement (3) étant apte à éclairer l'objet (15) dans plusieurs pixels, et comportant une unité formant détecteur (19) recevant la lumière provenant de l'objet (15) et générant des signaux de détection, un circuit numérique (30) étant monté en aval de l'unité formant détecteur (19), lequel circuit extrait périodiquement les signaux de détection à l'intérieur d'un pixel (P_{x, y}) et forme à partir de ceux-ci une valeur moyenne,
le circuit numérique (30) contenant un additionneur (31) additionnant périodiquement les divers signaux de détection à l'intérieur d'un pixel, et le circuit numérique (30) contenant un diviseur (32) divisant la somme des divers signaux de détection par un nombre de signaux de détection à l'intérieur du pixel (P_{x, y}) respectif,
un multiplicateur (33) étant monté en amont de l'additionneur (31) et du diviseur (32) dans le circuit numérique (30),
le multiplicateur (33) effectuant une amplification des signaux de détection, de telle sorte que la précision numérique de l'additionneur (31) et du diviseur (32) est accrue
et le microscope à balayage (1) étant doté d'un élément de réglage (60) pouvant être réglé par un utilisateur du microscope à balayage (1) pour l'amplification, de sorte que l'on obtient une combinaison d'une amplification numérique dans le circuit numérique (30) et d'une amplification analogique de l'unité formant détecteur (19).

2. Dispositif selon la revendication 1, **caractérisé en ce que** l'amplification analogique de l'unité formant détecteur (19) peut être compensée par une multiplication correspondante dans le circuit numérique (30).

3. Dispositif selon la revendication 2, **caractérisé en ce que** l'unité formant détecteur (19) présente une courbe caractéristique (54) réalisant au moyen de l'amplification dans le circuit numérique une élévation de la dynamique de la sensibilité de l'unité formant détecteur (19).

4. Dispositif selon l'une quelconque des revendications 1 à 3, **caractérisé en ce que** le microscope à balayage (1) est un microscope à balayage laser.

5. Procédé de détection de lumière au moyen d'un microscope à balayage (1), le microscope à balayage (1) possédant un mécanisme de balayage (7) guidant un faisceau de lumière d'éclairement (3) à travers une optique de balayage (12) et une optique de microscope (13) au-dessus d'un objet (15) ou à travers un objet (15), l'objet (15) étant éclairé dans plusieurs pixels (P_{x, y}) avec le faisceau de lumière d'éclairement (3), et la lumière provenant de l'objet (15) étant reçue et des signaux de détection étant générés au moyen d'une unité formant détecteur (19), comprenant les étapes supplémentaires suivantes selon lesquelles les signaux de détection de l'unité formant détecteur (19) sont extraits et additionnés périodiquement au moyen d'un circuit numérique (30) et la somme des signaux de détection est divisée par le nombre de signaux de détection additionnés,
le circuit numérique (30) contient un additionneur (31) additionnant périodiquement les divers signaux de détection à l'intérieur d'un pixel (P_{x, y}), et le circuit numérique (30) contient un diviseur (32) divisant la somme des divers signaux de détection par un nombre de signaux de détection à l'intérieur du pixel (P_{x, y}),
un multiplicateur numérique (33) est monté en amont de l'additionneur (31) et du diviseur (32) dans le circuit numérique (30),
une amplification des signaux de détection est effectuée au moyen du multiplicateur (33), de telle sorte que la précision numérique de l'additionneur (31) et du diviseur (32) est accrue,
le microscope à balayage (1) est doté d'un élément de réglage (60) pouvant être réglé par un utilisateur du microscope à balayage (1) pour l'amplification, de sorte qu'on obtient une combinaison d'une amplification numérique du circuit numérique (30) et d'une amplification analogique de l'unité formant détecteur (19).

6. Procédé selon la revendication 5, **caractérisé en ce que** l'amplification analogique de l'unité formant détecteur (19) est compensée par une multiplication correspondante dans le circuit numérique (30).

7. Procédé selon la revendication 6, **caractérisé en ce que** l'unité formant détecteur (19) présente une courbe caractéristique (54) dont la dynamique est élevée au moyen de l'amplification dans le circuit numérique (30).

8. Procédé selon l'une quelconque des revendications 5 à 7, **caractérisé en ce que** le microscope à balayage (1) est un microscope à balayage laser.
